(19) Europäisches Patentamt
European Patent Office
Office européen des brevets

(11) **EP 1 438 754 B1**

(12) **EUROPÄISCHE PATENTSCHRIFT**

(45) Veröffentlichungstag und Bekanntmachung des Hinweises auf die Patenterteilung:
**28.12.2005 Patentblatt 2005/52**

(21) Anmeldenummer: 02767032.2

(22) Anmeldetag: **18.10.2002**

(51) Int Cl.⁷: $H01L\ 41/09$

(86) Internationale Anmeldenummer:
**PCT/CH2002/000568**

(87) Internationale Veröffentlichungsnummer:
**WO 2003/036786 (01.05.2003 Gazette 2003/18)**

(54) **PIEZOELEKTRISCHER ANTRIEB**

PIEZOELECTRIC MOTOR

ENTRAINEMENT PIEZO-ELECTRIQUE

(84) Benannte Vertragsstaaten:
**AT BE BG CH CY CZ DE DK EE ES FI FR GB GR IE IT LI LU MC NL PT SE SK TR**

(30) Priorität: **22.10.2001 CH 193601**

(43) Veröffentlichungstag der Anmeldung:
**21.07.2004 Patentblatt 2004/30**

(73) Patentinhaber: **miniswys SA**
**2503 Biel (CH)**

(72) Erfinder: **WITTEVEEN, Bonny**
**NL-5912 JB Venlo (NL)**

(74) Vertreter: **Frei Patent Attorneys**
**Frei Patentanwaltsbüro**
**Postfach 1771**
**8032 Zürich (CH)**

(56) Entgegenhaltungen:
EP-A- 0 963 033      WO-A-01/41228
JP-A- 11 052 075      US-A- 4 814 660
US-A- 5 296 776

- **PATENT ABSTRACTS OF JAPAN vol. 011, no. 088 (E-490), 18. März 1987 (1987-03-18) -& JP 61 240865 A (TOSHIBA CORP), 27. Oktober 1986 (1986-10-27)**
- **PATENT ABSTRACTS OF JAPAN vol. 018, no. 540 (E-1616), 14. Oktober 1994 (1994-10-14) -& JP 06 189569 A (ZEXEL CORP), 8. Juli 1994 (1994-07-08)**

**Beschreibung**

Die Erfindung betrifft einen piezoelektrischen Antrieb nach dem Oberbegriff des ersten, unabhängigen Patentanspruchs.

Piezoelektrische Antriebe, das heisst Antriebe mittels piezokeramischer Materialien, die durch ein elektrisches Spannungsfeld mechanisch veränderbar sind, eignen sich insbesondere für miniaturisierte Anwendungen, beispielsweise für Motoren mit einem Volumen in der Grössenordnung von wenigen Kubikzentimetern oder gar mit einem Volumen, das kleiner ist als ein Kubikzentimeter. Weitere Vorteile dieser Antriebe sind ein hohes Moment bei kleinen Geschwindigkeiten, eine einfache Regelbarkeit, ein ruhiger Lauf, ein relativ einfacher Aufbau und Unempfindlichkeit gegenüber externen magnetischen Feldern sowie die Tatsache, dass sie selber keine magnetischen Felder erzeugen.

Piezoelektrische Antriebe vom sogenannten Stehende-Welle-Typus weisen als antreibendes Element mindestens einen Resonator auf, der üblicherweise aus einem Piezoelement und einem mechanisch an das Piezoelement gekoppelten Resonanzkörper (Horn) besteht, wobei das Piezoelement und der Resonanzkörper derart aufeinander abgestimmt sind und das Piezoelement derart angetrieben wird, dass der Resonator in einer stehenden Welle schwingt. Das Horn weist ein vom Piezoelement wegweisendes, sich verjüngendes freies Ende auf, das vorteilhafterweise auf einem Punkt grösster Schwingungsamplitude liegt. Es zeigt sich, dass solche Hornspitzen, wenn sie in geeigneter Weise gegen einen beweglichen Körper gedrückt werden, diesen gerichtet antreiben können, wobei die Kraftübertragung auf einem Reibschluss beruht.

In "Piezoelectric Actuators and Ultrasonic motors" von Kenji Uchino (Kluwer Academic Publishers, Boston, Dordrecht, London, 1997) wird ein derartiger Antrieb beschrieben. Dieser weist ein Paar von koaxial übereinander angeordneten, scheibenförmigen Piezoelementen auf, die in entgegengesetzter Richtung polarisiert in einem 3,3-Modus betrieben werden. Ein Horn schliesst im wesentlichen ebenfalls koaxial an die Piezoelemente an. Die Hornspitze wird gegen die Oberfläche eines Körpers gepresst, der parallel zu dieser Oberfläche beweglich angeordnet ist. Es zeigt sich, dass der Körper sich mit Hilfe des Horns gerichtet antreiben lässt, wenn die Achse des Horns nicht genau senkrecht gegen die Oberfläche gerichtet wird sondern mit der Senkrechten auf die Oberfläche einen kleinen, spitzen Winkel bildet. Wenn der derart angeordnete Resonator mit einer Eigenfrequenz angetrieben wird, treibt er den Körper in diejenige Richtung, in die die leicht schiefe Hornspitze zeigt. Die induzierte, gerichtete Bewegung des angetriebenen Körpers wird mit elliptischen Schwingungen der Hornspitze in einer Ebene senkrecht zur Oberfläche des Körpers erklärt. Eine Umkehrung der Bewegungsrichtung wird durch eine Umorientierung der Resonatorachse erzielt.

In der Publikation DE-3920726 (Olympus Optical) wird ein ähnlicher Piezomotor beschrieben. Anstelle des relativ zu seiner Achse symmetrischen Resonators des oben kurz beschriebenen Motors weist der Motor gemäss DE-3920726 ein asymmetrisches Horn auf, dessen sich verjüngendes Ende nicht auf der Resonatorachse liegt. Der Resonator wird mit senkrecht auf die Oberfläche des anzutreibenden Körpers gerichteter Achse angeordnet und bewirkt bei geeigneter Ausformung der Hornverjüngung gegen die Hornspitze eine gerichtete Bewegung des Körpers. Dabei gibt es Schwingungszustände bei voneinander verschiedenen Frequenzen, die Bewegungen in entgegengesetzten Richtungen erzeugen. Die Bewegungsrichtung ist also über die die Piezoelemente antreibende Frequenz einstellbar. Der Antrieb wird zur Anwendung als Linearantrieb oder als Rotationsantrieb vorgeschlagen, wobei die Resonatorachse senkrecht auf eine Stirnfläche des Rotors (axial) oder senkrecht auf die Mantelfläche des Rotors (radial) ausgerichtet wird. Der Motor weist einen grossen Verschleiss auf.

Der piezoelektrische Antrieb gemäss DE-3920726 lässt sich als Rotationsmotor mit stirnseitigem Antrieb mit relativ einfachen Mitteln realisieren. In der Ausführungsform mit dem stirnseitigen Antrieb ist es auch mit einfachen Mitteln möglich, Rotor und Resonator gegeneinander vorzuspannen. Insbesondere für diese Ausführungsformen mit axial ausgerichteter Resonatorachse sind aber einer Miniaturisierung Grenzen gesetzt, die man gerne unterschreiten möchte.

Für Motoren, die in axialer Richtung sehr flach sein sollen, wird vorgeschlagen (z.B. EP-0505848, ETA SA) ein zentral angeordnetes, kreisscheibenförmiges Piezoelement anzuwenden, das in einem planaren Modus antreibbar ist. Dieses Piezoelement ist an einen flachen, mit dem Piezoelement koaxial angeordneten Resonanzkörper gekoppelt, der eine Mehrzahl von sich radial gegen einen Aussenring erstreckenden asymmetrischen Hornspitzen aufweist. Durch das Piezoelement angetrieben schwingen die Hornspitzen wiederum in elliptischen Bewegungen, durch die der Aussenring gerichtet um den Resonator rotierend bewegt wird. Der beschriebene Antrieb kann in axialer Richtung sehr dünn ausgestaltet werden und ist ein Aussenläufer. Eine Vorspannung zwischen Resonanzkörper und Aussenring ist nicht möglich, so dass der Antrieb auf Abrieb an den Hornspitzen sehr empfindlich reagiert und die durch Reibung übertragbare Kraft beschränkt bleibt. Herkömmliche Motoren wirken primär senkrecht zu einer anzutreibenden Fläche, was mit viel Abnutzung und einer kurzen Lebensdauer verbunden ist.

In der JP-11052075 ist unter anderem ein Antrieb mit vier symmetrisch angeordneten, in einer Ebene schwingenden Antriebsarmen offenbart, welche jeweils über ein erstes flexibles Gelenk befestigt und über ein zweites flexibles Gelenk über die Ecken einer quadratischen Platte in Bewegung versetzt werden. Die Platte trägt ein Anregungsmittel und wird durch die vier Arme gehalten.

Weitere Piezoelektrische Antriebe sind in EP-0963033 und US-4814660 offenbart.

Die Erfindung stellt sich die Aufgabe, einen piezoelektrischen Antrieb vom "Typ Aussenläufer" zu schaffen, der aus wenigen Teilen besteht, einfach realisierbar ist und sich für Antriebe unterschiedlicher Grösse und Leistung eignet.

Diese Aufgabe wird gelöst durch den piezoelektrischen Antrieb, wie er durch Patentanspruch 1 definiert wird. Bevorzugte Ausführungsformem sind in dem abhängigen Ansprüchen definiert. Der erfindungsgemässe, piezoelektrische Antrieb dient zur Erzeugung einer gerichteten, relativen Rotationsbewegung zwischen einem anzutreibenden Aussenteil, welcher einen stillstehenden Innenteil umgibt. Solche Antriebe vom Typ "Aussenläufer" weisen aufgrund des vergleichsweise grossen Hebelarms ein hohes Antriebs-, respektive Haltemoment auf. Aufgrund der kompakten Bauweise weisen sie zudem eine hohe Leistungsdichte auf.

Erfindungsgemässe Aussenläufer weisen einen Innenteil auf, der als krafterzeugendes Antriebselement dient. Der Innenteil wirkt auf eine bevorzugt im Wesentlichen kreisrund ausgebildete, nach innen gerichtete Antriebsfläche eines Aussenteils. Der Aussenteil kann beispielsweise ein ring- oder glockenförmiges Mittel sein und mittels dem Innenteil gelagert sein, oder falls erforderlich eine separate Lagerung aufweisen. Die anzutreibende Innenfläche ist bevorzugt kreiszylindrisch ausgestaltet.

Der antreibende Innenteil weist eines oder mehrere gleichwirkende Piezoelemente auf. Jedes Piezoelement ist mit einem Schwingelement verbunden das direkt oder indirekt auf die Antriebsfläche wirkt. Das Schwingelement ist derart ausgestaltet, dass es die antreibende Bewegung des Piezoelements in Richtung und Grösse transformiert und in eine geeignete Antriebsbewegung umsetzt, die auf den anzutreibenden Körper übertragen wird. Wird das Schwingelement, respektive der Resonator als ganzes, frei angeregt, das heisst, ohne dass es mit dem anzutreibenden Körper in Wirkverbindung steht, führt das Schwingelement an definierten Stellen eine charakteristische Bewegung aus. Diese charakteristische Bewegung gleicht bevorzugt einer Ellipse. Für höhere Antriebsgeschwindigkeit wird eine eher flache und für höhere Antriebskraft eine eher runde Ellipse bevorzugt. Wird der Antriebsbereich mit dem anzutreibenden Körper in Kontakt gebracht, verändert sich die resultierende Bewegung aufgrund der Interaktion mit dem anzutreibenden Körper.

Das Innenteil oder Teile davon werden durch das oder die Piezoelemente zum Schwingen angeregt. Die Schwingfrequenz entspricht in der Regel einer Resonanzfrequenz des Innenteils. Das Innenteil weist eine Masseverteilung auf die derart gewählt ist, dass durch die Wahl der Schwingfrequenz wird die charakteristische Bewegung des Resonators und damit die Drehrichtung des Antriebs bestimmbar ist. Somit ist es möglich, dass der Antrieb bei einer ersten Frequenz in eine Richtung dreht und bei einer zweiten Frequenz in die andere Richtung dreht. Die Drehgeschwindigkeit wird über die Amplitude des Resonators eingestellt oder durch Modulation beeinflusst. Der Antrieb kann als Schrittmotor betrieben werden, indem die Antriebsspannung impulsweise angelegt wird.

Das Schwingelement ist bevorzugt aus Metallblech mit guten Schwingeigenschaften (Q-Faktor) gefertigt auf dem das Piezoelement mittels Klebstoff befestigt wird. Der Elastizitätsmodul (E-Modul) des Metallblechs und des Piezoelements, respektive die Dicke des Metallblechs und des Piezoelements wird bevorzugt so gewählt, dass folgende Formel erfüllt wird

$$\text{E-Modul}_{Metallblech} * \text{Dicke}_{Metallblech} = \text{E-Modul}_{Piezoelement} * \text{Dicke}_{Piezoelement} \cdot$$

Bei gewissen Ausführungsformen ist der Einfluss der Klebschicht zwischen einem Schwingelement und einem Piezoelement als elastische Zwischenschicht zu berücksichtigen. Das Material des Schwingelements sollte so wenig wie möglich dämpfend wirken und eine genügende mechanische Festigkeit aufweisen. Da die Kraft des erfindungsgemässen Antriebs primär über Reibung auf den zu bewegenden Körper übertragen wird, ist die Materialpaarung zwischen zu bewegendem Körper und Antriebsblech entsprechend zu wählen. Gegebenenfalls kann der Interaktionsbereich des Resonatorbereichs, der mit dem anzutreibenden Körper in reibendem Kontakt steht, aus einem für die Kraftübertragung durch Reibung geeigneteren Material bestehen oder mit diesem beschichtete sein als der Rest des Antriebsbleches.

Der Innenteil eines erfindungsgemässen Antriebs, weist bevorzugt eine sternförmige Ausgestaltung mit mehreren Interaktionsbereichen auf, die mit der Antriebsfläche des anzutreibenden Aussenteils in Wirkverbindung stehen. Der Innenbereich weist ein oder mehrere Piezoelemente auf die mit einem oder mehreren Schwingelementen gekoppelt einen Resonator oder mehrere Resonatorbereiche bilden. Zum Antreiben des Aussenteils werden primär Bewegungen ausgenutzt, die in der Ebene des Schwingelements liegen.

Eine bevorzugte Ausführungsform eines Innenteils weist ein zentrales Piezoelement auf, das zwischen zwei zentrisch angeordneten, beabstandeten Schwingelementen angeordnet ist und mit diesen in Wirkverbindung steht. Die Schwingelemente bestehen aus elastischem Material und weisen je einen Mittelteil auf, um den federnde, nach aussen gerichtete Arme angeordnet sind. Diese Arme sind bevorzugt gekrümmt ausgestaltet und verlaufen zumindest bereichsweise in etwa tangential zur Antriebsfläche des Aussenteils. Sie stehen mit diesem über Interaktionsbereiche (z.B. Kantenbereiche) in Kontakt. Das Schwingelement mit den Armen ist bei dieser Ausführungsform derart ausgestaltet, dass es zusammen mit dem Piezoelement einen Resonator bildet. Die Arme dienen dabei als elastisches Übertragungselement zwischen dem Piezoelement und dem anzutreibenden Körper. Der Innenteil weist eine Lagerung auf die derart ausgestaltet ist, dass die antreibenden Schwingung nicht negativ beeinflusst werden. Besonders geeignet sind eine mechanische Entkopplung durch einen fliegende Lagerung und/oder elastische Lagerung, die gleichzeitig zum Ausgleichen von den Rundlauf beeinflussenden Ungenauigkeiten dienen. Dies kann z.B. durch ein Drehmoment übertragendes Gummielement realisiert werden. Die Schwingelemente können zur elektrischen Ansteuerung des Piezoelements dienen.

Eine weitere bevorzugte Ausführungsform weist ein Schwingelement mit mehreren um einen Mittelteil angeordneten Armen auf wobei jeder dieser Arme einen verdickten Bereich aufweist, der über eine Dünnstelle mit dem Mittelteil verbunden ist. Am verdickten Bereich ist ein anregendes Piezoelement angebracht. Die Dünnstellen dienen zur elastischen Lagerung der verdickten Bereiche und den Piezoelementen gegenüber dem Mittelteil. Der Mittelteil, der bevorzugt aus einem ebenen Blech besteht, bildet einen Ruhebereich, an dem mindestens ein Resonatorbereich (verdickter Bereich) angeformt ist. Das Schwingverhalten eines beispielsweise aus Blech gefertigten Innenteils kann durch Sicken, Aussparungen oder Einpressungen abgestimmt werden. Zwischen Ruhebereich und Resonatorbereich ist ein schmaler, in Richtung der flächigen Ausdehnung des Antriebsbleches federnder Federbereich angeordnet. An einem Resonatorbereich ist mindestens auf der einen Seite des Antriebsbleches ein dünnes, rechteckiges, vorzugsweise in einem 3,1-Modus betreibbares, sich parallel zum Antriebsblech erstreckendes Piezoelement angekoppelt, vorteilhafterweise aufgeklebt. Das Piezoelement hat bevorzugt eine Länge, die grösser ist als seine Breite, wobei seine Länge und seine Breite bedeutend grösser sind als seine Dicke.

Die beiden sich quer zur Dicke erstreckenden Oberflächen des Piezoelementen sind als Kontaktflächen ausgerüstet. Die Längsachse des Piezoelementen liegt im wesentlichen auf einer Längsachse des Resonatorbereichs, der vorteilhafterweise im wesentlichen dieselbe Breite hat wie das Piezoelement. In Richtung der Längsachse überragt der Resonatorbereich das Piezoelement mindestens auf einer Seite, wo er ein sich vorteilhafterweise zur Längsachse asymmetrisch verjüngendes Horn mit einem Interaktionsbereich bildet. Piezoelement und Resonatorbereich sind derart aufeinander abgestimmt, dass sie zusammen einen Resonator bilden, der durch Polarisierung des Piezoelementes mit einer hochfrequenten Wechselspannung in einen in einer stehenden Welle schwingenden Zustand bringbar ist. Die Ansteuerung des Antriebs erfolgt über einen Frequenzgenerator der mit dem Antrieb eine Einheit bilden kann.

Die mit Hilfe des erfindungsgemässen, piezoelektrischen Antriebs relativ zueinander zu bewegenden zwei Körper, von denen der erste das Schwingelement ist oder mit dem Ruhebereich des Schwingelements fest verbunden ist, sind derart angeordnet, dass die Hornspitze des Resonatorbereichs mit einer im wesentlichen quer zum Antriebsblech ausgerichteten Antriebsfläche des zweiten Aussenteils in Kontakt steht und zwar so, dass der leicht vorgespannte Federbereich den Resonatorbereich gegen den Aussenteil presst und dass die Längsachsen von Piezoelement und Resonatorbereich im wesentlichen parallel oder tangential zur zu erzeugenden Bewegung ausgerichtet sind. Der mit dem zweiten (anzutreibenden) Körper in Berührung stehende Kantenbereich des Antriebsbleches befindet sich unmittelbar bei der Homspitze und ist im wesentlichen parallel zu den Längsachsen von Piezoelement und Resonatorbereich ausgerichtet.

Neben der Funktion der Erzeugung einer Vorspannung zwischen den beiden relativ zueinander zu bewegenden Körpern hat der Federbereich des Antriebsbleches auch die Aufgabe, die durch das angetriebene Piezoelement erzeugte Vibration vom Ruhebereich des Antriebsbleches zu entkoppeln.

Es zeigt sich, dass der Interaktionsbereich (Hornspitze) eines derart flachen Resonatorbereichs unter Anregung durch das Piezoelement in einer Resonanzfrequenz elliptische Bewegungen in der Ebene des Antriebsbleches ausführt, aus der sich die gerichtete relative Bewegung zwischen den beiden Körpern ergibt. Es zeigt sich auch, dass es Resonanzzustände gibt mit einer ersten Bewegungsrichtung und andere Resonanzzustände mit einer zweiten, der ersten entgegengesetzten Bewegungsrichtung.

Die elliptischen Bewegungen der Homspitze können als Überlagerung der Longitudinalschwingung in Richtung der Längsachsen von Piezoelement und Resonatorbereich mit Transversalschwingungen in Richtung der Breite des Piezoelementes verstanden werden, wobei sich die Transversalschwingungen als Biegeschwingungen in das Horn fortpflanzen. Andererseits ist auch durch eine asymmetrische Ausgestaltung des Hornes eine gerichtete Biegeschwingung zu erwarten.

Es zeigt sich, dass eine Anordnung, in der die Longitudinalschwingung im wesentlichen parallel verläuft zur Bewegungsrichtung bzw. parallel oder tangential zur zu bewegenden Oberfläche, gegenüber der im wesentlichen senkrechten Anordnung gemäss Stand der Technik ruhiger und mit besserem Wirkungsgrad läuft, was mit schwächeren Schlägen senkrecht auf die anzutreibende Oberfläche erklärt werden kann.

Schwingungen des Piezoelementes in der Richtung seiner Dicke wirken sich insbesondere dann, wenn beidseitig vom Resonatorbereich je ein gleiches Piezoelement angekoppelt ist und die beiden Piezoelemente einander entgegengesetzt polarisiert werden, kaum auf den Resonatorbereich aus, so dass keine Energie durch Reibung bei Bewegungen der Homspitze quer zur Bewegungsrichtung verloren geht.

Für die elektrische Polarisierung aller auf einem Antriebsblech angeordneten Piezoelemente kann das Antriebsblech als der eine der beiden elektrischen Anschlüsse ausgenützt werden, wenn das Antriebsblech aus einem elektrisch leitenden Material besteht und die Piezoelemente mit einem elektrisch leitenden Kleber darauf montiert sind. Eine sehr einfache Speisung ergibt sich, wenn zwei identische Antriebsbleche verwendet werden und die Piezoelemente dazwischen angeordnet und über die beiden Antriebsbleche gespeist werden. Alle Piezoelemente können bei einer derartigen Ausführungsform mit nur zwei elektrischen Anschlüssen an die beiden elektrisch leitenden Antriebsbleche gespeist werden, was insbesondere für Kleinstausführungen des piezoelektrischen Antriebs ein Vorteil ist. Die Lage der elektrischen Anschlüsse ist derart zu wählen, dass keine negative Beeinflussung des Schwingverhaltens auftritt.

Um bei einer Ausführungsform mit zwei Antriebsblechen allfällige Schwingungen der Hornspitzen in Richtung der Dicke des Antriebsbleches zu reduzieren, ist es möglich, die Hornspitzen jedes Resonatorbereichs der beiden Antriebsbleche über einen geeigneten Distanzhalter miteinander zu verbinden. Dieser Distanzhalter oder ein anderes geeignetes Element kann gleichzeitig zur Beeinflussung des Schwingverhaltens beeinflusst werden. Durch ein Distanzhalter kann die Reibfläche zudem erhöht werden.

Vorteilhafterweise besteht das Antriebsblech aus einem gut wärmeleitenden Material und ist gross genug, um die bei der Vibration in den Piezoelementen entstehende Wärme abzuführen.

Die Erfindung betrifft einen piezoelektrischen Antrieb zur Erzeugung einer Relativbewegung in einer Bewegungsebene zwischen einem ersten Körper und einem zweiten Körper. Dieser Antrieb weist mindestens ein mit einer hochfrequenten Wechselspannung antreibbares Piezoelement und zwei an dieses mechanisch angekoppelte und durch das Piezoelement in einer stehenden Welle erregbare Resonatoren mit je einem Horn auf. Die Resonatoren sind mit dem ersten Körper wirkverbunden. Ein Bereich der Hörner ist zum gerichteten Antreiben gegen eine Oberfläche des zweiten Körpers pressbar.

Ein bevorzugte Antrieb weist ein Antriebsblech auf, das den ersten Körper bildet oder an diesem befestigt ist und das im wesentlichen parallel zur Bewegungsebene angeordnet ist. Das Antriebsblech weist einen Ruhebereich und mindestens zwei Resonatorbereiche auf, wobei zwischen Ruhebereich und den Resonatorbereichen jeweils ein im wesentlichen parallel zur Ebene des Antriebsbleches federnder Federbereich angeordnet ist. An den mindestens zwei Resonatorbereichen ist seitlich ein Piezoelement angekoppelt. Der zweite Körper ist relativ zum Antriebsblech derart positionierbar, dass die mindestens zwei Resonatorbereiche mit Kantenbereichen, die im Bereich der Hörner liegen, durch eine Vorspannung der Federbereiche in Kontaktbereichein gegen eine im wesentlichen quer zur Ebene des Antriebsbleches ausgerichtete Oberfläche des zweiten Körpers gepresst werden, so, dass dieser im wesentlichen parallel zu dieser Oberfläche antreibbar ist.

Beispielhafte Ausführungsformen des erfindungsgemässen Piezoantriebs werden im Zusammenhang mit den folgenden Figuren beschrieben. Dabei zeigen schematisch und stark vereinfacht:

**Figur 1**     eine erste Ausführungsform eines piezoelektrischen Antriebs;

**Figur 2**     eine Draufsicht auf den piezoelektrischen Antrieb gemäss Figur 1;

**Figur 3**     einen Schnitt durch den piezoelektrischen Antrieb gemäss Figur 2;

**Figur 4**     eine zweite Ausführungsform eines piezoelektrischen Antriebs;

**Figur 5**     eine Draufsicht auf den Innenteil des piezoelektrischen Antriebs gemäss Figur 4;

**Figur 6**     einen Schnitt durch den Innenteil gemäss Figur 5;

**Figur 7**     eine dritte Ausführungsform eines piezoelektrischen Antriebs;

**Figur 8**     eine weitere Ausführungsform eines Innenteils;

**Figur 9**     einen Antrieb mit einem Innenteil gemäss Figur 8 mit einer schwimmenden Lagerung;

**Figur 10**     einen Linearantrieb;

**Figur 11**     einen Antrieb gemäss Figur 7 in einer Sandwichanordnung.

**Figur 12**     einen Antrieb, bei dem die Resonatoren in einer steilen Position zur Tangentialen angeordnet sind.

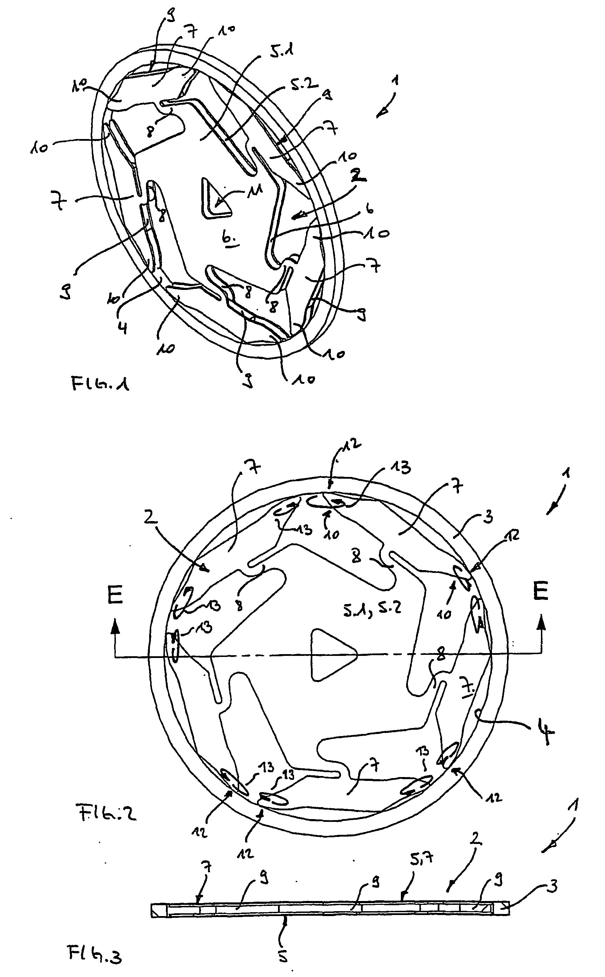

**Figur 1** zeigt eine erste Ausführungsform eines erfindungsgemässen Antriebs 1. Der Antrieb 1 weist einen Innenteil 2 und einen Aussenteil 3 mit einer zylindrischen Antriebsfläche 4 auf. Der Innenteil 2 weist zwei Schwingelemente (Schwingbleche) 5.1, 5.2 auf die zueinander beabstandet angeordnet sind. Die Schwingbleche 5.1, 5.2 sind hier eben ausgebildet und weisen je einen Mittelteil 6 auf um den fünf Arme 7 angeordnet sind. Die Arme 7 dienen als Resonatorbereiche. Sie weisen Federbereiche 8 auf und sind über diese mit dem Mittelteil 6 verbunden. Die Federbereiche 8 dienen zur Lagerung und Halterung der Resonatorbereiche 7 gegenüber dem Mittelteil 6. Bei der gezeigten Ausführungsform sind der Mittelteil 6, die Resonatorbereiche 7 und die Federbereiche 8 jedes Schwingelements 5.1, 5.2 aus einem Metallblech z.B. durch Stanzen oder Laserstrahl-Schneiden gefertigt.

Zwischen zwei beabstandeten Resonatorbereichen 7 sind rechteckige Piezoelemente 9 angeordnet, die mit den Resonatorbereichen 7 verklebt sind. Die Resonatorbereiche 7 sind im Wesentlichen trapezförmig ausgestaltet. Je zwei gegenüberliegende Spitzen jedes Resonatorbereichs 7 weisen vorstehende Homelemente 10 auf, die als Interaktionsbereiche ausgebildet sind. Die Homelemente 10 stehen mit der Antriebsfläche 4 des Aussenteils 3 in Wirkverbindung. Die Resonatorbereiche 7 sind derart ausgebildet und angeordnet, dass sie, angeregt durch die Piezoelemente 9, eine charakteristische Schwingbewegung ausführen, die im wesentlichen einer Ellipse gleicht. Diese charakteristische Bewegung wird mittels Reibschluss auf die Antriebsfläche 4 übertragen, derart dass der Aussenteil 3, der hier als Ring 3 ausgebildet ist, um seine Achse dreht.

Im Zentrum jedes Mittelteils 6 sind je eine Öffnungen 11 zu erkennen. Diese Öffnungen 11 dienen zur Befestigung des Innenteils 2 an einer Halterung (nicht näher dargestellt). Die Befestigung gegenüber der Halterung ist derart ausgestaltet, dass negative Vibrationen nicht übertragen werden.

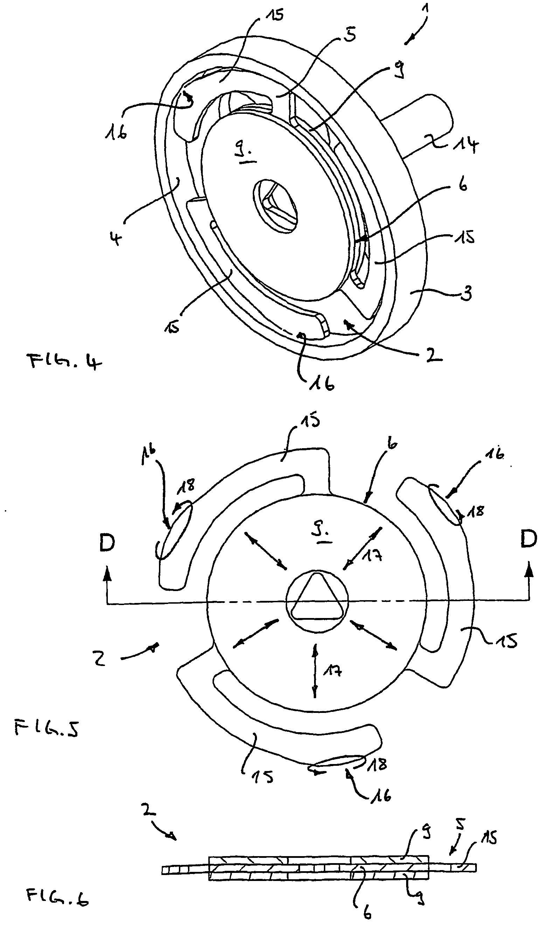

**Figur 2** zeigt eine Frontalansicht des Antriebs gemäss Figur 1. Wie zu erkennen ist, weist jeder Resonatorbereich 7 hier mehrere Berührungspunkte 12 (bspw. für eine rasch aufeinanderfolgende Antriebsbewegung) mit der Antriebsfläche 4 des Aussenteils 3 auf. Alternativ ist es möglich die Resonatorbereiche derart zu gestalten, dass pro Resonatorbereich 7 nur ein Berührungspunkt 12 vorhanden ist. Eine charakteristische Bewegung der Berührungspunkte 12, wie sie sich bei einer Frequenz einstellt, ist durch Pfeile 13 schematisch dargestellt. Bei einer anderen Frequenz vollbringen die Berührungspunkte 12 der Hörner 10 eine andere charakteristische Bewegung.

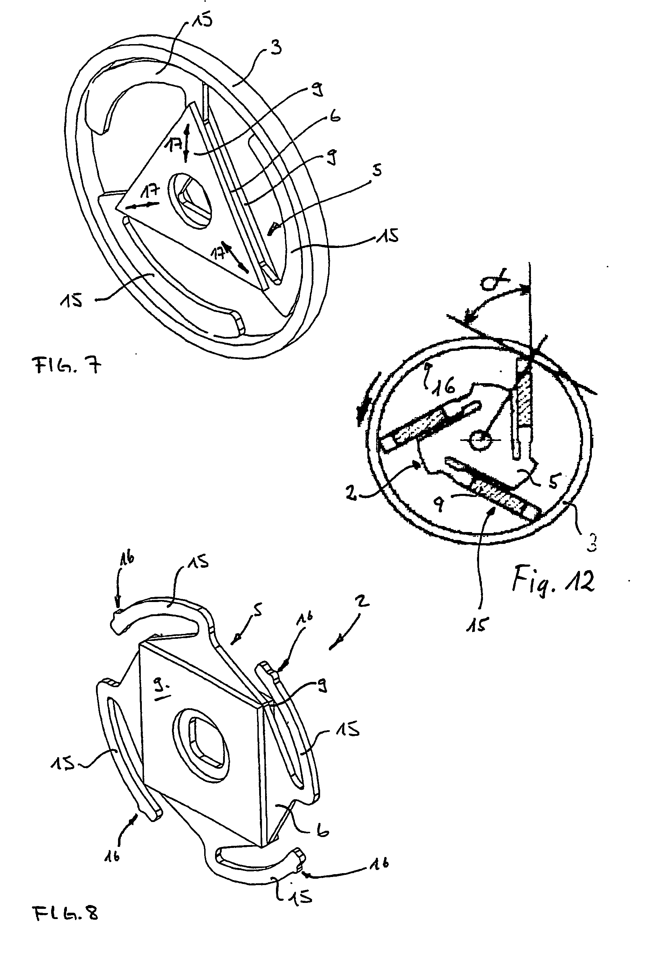

**Figur 3** zeigt einen Schnitt entlang einer Linie EE durch den Antrieb 1 gemäss Figur 2. Die Piezoelemente 9 sind zwischen den Resonatorbereichen 7 der Schwingbleche 5 angeordnet. Der ringförmige Aussenteil 3 umgibt den Innenteil 2. Der ringförmige Aussenteil 3 wird hier durch den Innenteil 2 getragen und geführt. Damit der Innenteil eine bessere Führung aufweist kann die Antriebsfläche zusätzliche axiale Führungsmittel aufweisen oder durch ihre Ausgestaltung eine erhöhte Führungswirkung aufweisen.

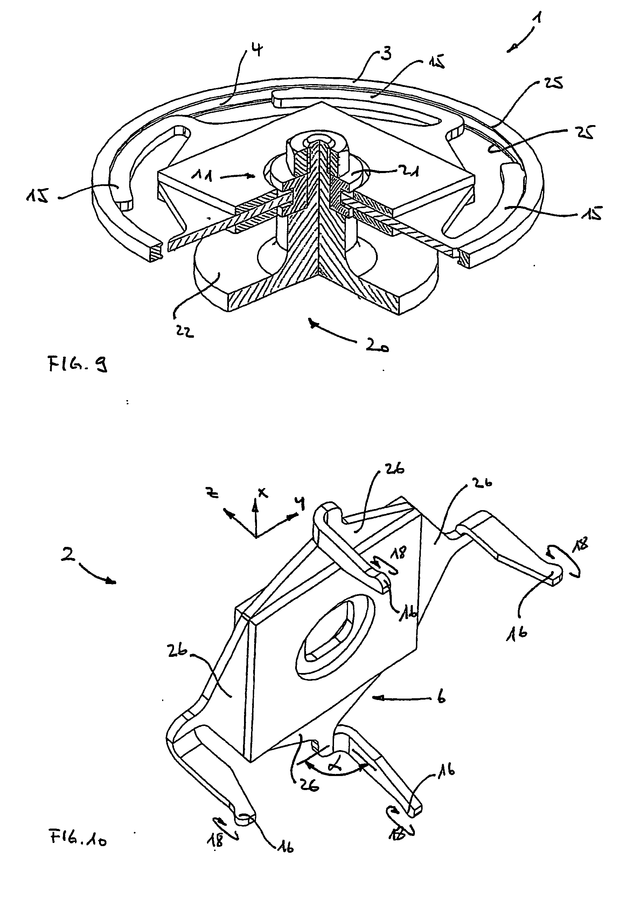

**Figur 4** zeigt eine weitere Ausführungsform eines erfindungsgemässen Antriebs 1. Der Innenteil 2 besteht hier aus einem ebenen Schwingblech 5 mit einem runden Mittelteil 6 und drei radial vorstehende, gekrümmte Arme 15. Zu beiden Seiten des runden Mittelteils 6 sind je ein Piezoelement 9 angeordnet. Die Piezoelemente 9 sind mittels Klebstoff mit dem Schwingblech 5 verbunden und dienen zum beidseitigen Anregen desselben. Die Piezoelemente 9 bilden zusammen mit dem Schwingblech 5 einen Resonator 2. Der Resonator 2 weist eine Masseverteilung auf die so ausgestaltet ist, dass die Schwingungen der Arme 15 geeignet sind um den glockenförmigen Aussenteil 3 anzutreiben. Die Arme 15 weisen je einen vorstehenden Interaktionsbereich 16 auf, der mit der Antriebsfläche 4 des Aussenteils 3 in Wirkverbindung steht. Der glockenförmige Aussenteil 3 weist eine Achse 14 auf die zum Übertragen der Antriebsbewegung dient. Die Achse 14 weist eine eigene Lagerung (nicht näher dargestellt) auf. Durch die drei Arme 15 ist der Innenteil 2 gegenüber dem anzutreibenden Aussenteil 3 selbstzentrierend.

Die Arme 15 sind radial vorstehend, gleichmässig verteilt um den Mittelteil 6 angeordnet. Sie weisen im Bereich ihres Anfangs einen Knick auf und gehen gegen ihr Ende hin in eine gekrümmte Form über, die im Wesentlichen der Kontur der Antriebsfläche 4 folgen. Die Arme 15 sind als Federelemente ausgebildet und dienen zum Übertragen und Transformieren der Schwingungen die durch die Piezoelemente angeregt werden. Sie weisen zu diesem Zweck je einen Interaktionsbereich 16 auf.

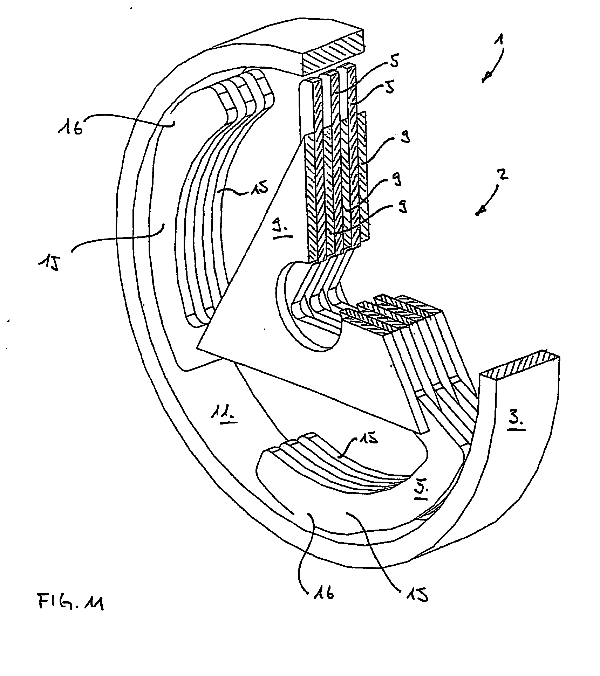

**Figur 5** zeigt eine Frontalansicht des Innenteils 2 des Antriebs 1 gemäss Figur 4. Der Aussenteil 3 ist nicht dargestellt. Die Piezoelemente 9 sind bei der gezeigten Ausführungsform derart ausgestaltet, dass sie im Wesentlichen in radialer Richtung (Pfeile 17) schwingen. Die Schwingungen der Piezoelemente 9 werden auf den Mittelteil 6 übertragen und von diesem auf die Arme 15. Die anregende Schwingung wird durch den Resonator 2 in eine charakteristische Bewegung 18 umgesetzt, die zum Antreiben des Aussenteils 3 dient.

**Figur 6** zeigt einen Schnitt entlang einer Linie DD gemäss Figur 5. Auf beiden Seiten des Schwingblechs 5 sind Piezoelemente 9 angeordnet.

**Figur 7** zeigt eine weitere Ausführungsform eines erfindungsgemässen Antriebs 1. Diese Ausführungsform entspricht im Wesentlichen der von Figur 4 mit dem Unterschied, dass der Mittelteil 6 dreieckig ausgebildet ist. Die Piezoelemente 9 sind ebenfalls dreieckig ausgestaltet und auf beiden Seiten des Schwingblechs 5 angebracht. In den Ecken des Mittelteils 6 sind radial drei geknickte Arme 15 angeordnet, die Arme 15 weisen in ihren Endbereichen ebenfalls je einen Interaktionsbereich 16 auf, der zum Antreiben eines ringförmigen Aussenteils 3 dient. Die dreieckige Form des Mittelteils 6 und der Piezoelemente 9 bewirken eine Verstärkung der Schwingbewegung 17 zu den Armen 15 hin. Dies wirkt sich positiv auf den Wirkungsgrad aus. Die Arme 15 sind elastisch ausgebildet. Zusammen mit dem Mittelteil 6 setzen sie die Schwingungen der Piezoelemente 9 in eine Antriebsbewegung um.

Durch die Ausrichtung und die Federeigenschaften der Arme 15 kann die Anpresskraft des Innenteils 2 gegenüber dem Aussenteil 3 eingestellt werden. Bei einer steileren Anordnung wirkt die Antriebskraft eher senkrecht zur anzutreibenden Fläche 4 und bewirkt damit einen höheren Kraftschluss.

**Figur 8** zeigt eine weitere Ausführungsform eines Innenteils 2, das zum Antreiben eines Aussenteils (nicht näher dargestellt) mit einer Aussenfläche geeignet ist. Der Innenteil 2 weist hier einen regelmässigen, achteckigen Mittelteil 6 auf, an dem an jeder zweiten Ecke ein Arm 15 angeordnet ist. Auf beiden Seiten des Mittelteils 6 sind je ein Piezoelement 9 angebracht. Die Piezoelemente 9 sind quadratisch ausgebildet und ihre Ecken korrespondieren mit den vier freien Ecken des Mittelteils 6. Das Schwingelement 5 und die Piezoelemente 9 bilden zusammen einen Resonator. Die Arme 15 sind als elastische Federn ausgebildet, welche hervorstehende Interaktionsbereich 16 aufweisen, die zur Übertragung der Antriebsbewegung auf einen Aussenteil (nicht näher dargestellt) dienen. Der Resonator 2 ist derart ausgestaltet, dass die Antriebsbewegung im wesentlichen in der Ebene des Schwingelements 5 liegt. Der Mittelteil 6 weist im wesentlichen eine rechteckige Öffnung 11 auf, die zur Aufnahme einer Halterung (nicht näher dargestellt) dient. Die Halterung dient zur Lagerung des Innenteils 2 und ist derart ausgestaltet, dass die für das Erzeugen der Antriebsbewegung erforderlichen Schwingungen nicht negativ beeinflusst werden.

Bei den in den Figuren gezeigten Ausführungsformen des Antriebs 1 ist es möglich eine Steigerung der Antriebsleistung zu erzielen, indem weitere Piezoelemente und Schwingelemente zu einem Stapel vereint werden. Bei einer entsprechenden Anordnung ist eine entsprechende Verbreiterung der Antriebsfläche erforderlich.

**Figur 9** zeigt den Antrieb 1 gemäss Figur 8 in einer Schnittdarstellung. Der Antrieb 1 ist auf einer Halterung 20 mit einem Gummielement 21 und einer Grundplatte 22 montiert dargestellt. Das Gummielement 21 ist in der Öffnung 11 des Innenteils 2 angeordnet und derart ausgestaltet, dass ein Verdrehen des Innenteils 2 gegenüber der Halterung 20 vermieden wird. Das Gummielement 21 und mit ihm der Innenteil 2 sind mittels einer Mutter 23 an der Grundplatte 22 befestigt. Das Gummielement 21 ist derart ausgestaltet, dass es entkoppelnd wirkt, derart, dass keine negativen Schwingungen auf die Grundplatte 21 übertragen werden. Gleichzeitig dient es zum Ausgleichen von allfälligen Ungenauigkeiten.

Die Antriebsfläche 4 des Aussenteils 3 ist auf beiden Seiten durch einen vorstehenden Rand 25 begrenzt. Der Rand 25 dient als axiale Führung und Begrenzung für die Arme 15.

**Figur 10** zeigt eine weitere Ausführungsform eines Innenteils 2. Die Arme 15 des Innenteils 2 sind abgewinkelt und ragen aus der Ebene des Mittelteils 6 heraus. Der Innenteil 2 ist derart ausgestaltet, dass die Interaktionsbereiche 16 eine charakteristische Bewegung 18 ausführen, die einen Antrieb in axialer Richtung (Z-Richtung) ermöglichen. Der Mittelteil 6 verjüngt sich zu den Armen 15 hin. Diese verjüngenden Bereiche 26 dienen zur Konzentration der Bewegung der Piezoelemente 9. Die Arme 15 sind hier in einem Winkel $\alpha$ zur Ebene des Mittelteils 6 angeordnet der im Wesentlichen 90° entspricht. Eine Anordnung in einem anderen Winkel ist möglich, derart dass eine Überlagerung einer Rotations- mit einer Axialbewegung erzielt wird (Spindelhubantrieb). Die Arme 15 sind elastisch ausgebildet und dienen zur Erzeugung einer Anpresskraft an einem anzutreibenden Aussenteil (nicht näher dargestellt).

**Figur 11** zeigt in einer Schnittdarstellung einen Antrieb 1 mit einem Innenteil 2 der mehrere hintereinander angeordnete Schwingbleche 5 und Piezoelemente 9 aufweist. Der Innenteil 2 treibt einen ringförmigen Aussenteil 3 an. Interaktionsbereiche 16 der Arme 15 stehen in Wirkverbindung mit einer Antriebsfläche 11 des Aussenteils 3.

Wie zu erkennen ist, sind je drei Arme 15 nebeneinander liegend angeordnet. Zwischen den nebeneinander liegenden Armen 15 können Distanzhalter angeordnet werden um das Schwingverhalten der Arme 15 zu beeinflussen. Der gezeigte Antrieb zeichnet sich durch eine hohe Antriebsleistung bei geringen Abmessungen aus. Die Arme 15 dienen gleichzeitig als Kühlelemente zum Abführen der entstehenden Wärme. Der Antrieb kann in einer Flüssigkeit gelagert betrieben werden.

**Figur 12** zeigt eine Ausführungsform in welcher die Resonatoren bzw. Arme 15 in einer 'steilen' Position zur Antriebstangentialen stehen. Dadurch wird der Vortrieb relativ gering, weil die elliptische Bewegung zur Tangente der Innenfläche des Aussenläufers ebenfalls 'steil' ist (grösserer Durchmesser der Ellipse zur Tangente) und die Flächenpressung relativ hoch, also eine Erhöhung der Antriebskraft, weil die federnde Aufhängung aufgrund der Lage relativ steif wird. Die Anbindung der Resonatoren erfolgt nicht im Knotenpunkt sondern am Ende des Resonatorkörpers bzw. Schwingbleches. Dies hat zur Folge, dass die Frequenz halbiert wird und die Ankopplung an den Stator, bzw. den Innenteil 2 ,5, die feste Basis sozusagen, extrem steif gemacht werden muss. Dadurch besteht allerdings ein Risiko von Störfrequenzen und Verlusten im Restkörper. Der Winkel alpha wird zwischen 30 bis 60 Grad gewählt.

**Patentansprüche**

1. Piezoelektrischer Antrieb (1) mit einem Innenteil (2) der von einem Aussenteil (3) umgeben ist, der eine nach innen gerichtete Antriebsfläche (4) aufweist, wobei der Innenteil (2) mindestens ein Piezoelement (9) aufweist, das mit mindestens einem Schwingelement (5), welches ebenso Teil des Innenteils ist, wirkverbunden ist und zum Anregen einer Schwingung (17) dient, wobei das Schwingelement (5) einen flächigen Mittelteil (6) aufweist um den mindestens zwei Arme (7, 15) angeordnet sind, die mit der Antriebsfläche (4) über je einen Interaktionsbereich (16) in Wirkverbindung stehen, und derart ausgestaltet sind, dass sie, durch das mindestens eine Piezoelement (9) in Schwingung versetzt, den Aussenteil (3) relativ zum Innenteil (2) antreiben, **dadurch gekennzeichnet, dass** der Mittelteil (6) an einer Halterung (20) zur Lagerung des Innenteils (2) befestigt ist, die Arme (7, 15) nur am Mittelteil (6) befestigt sind, die Arme (7, 15) als Federelemente wirken und durch diese Federwirkung gegenüber der Antriebsfläche (4) vorgespannt sind.

2. Antrieb gemäss Anspruch 1, **dadurch gekennzeichnet, dass** das Mittelteil (6) und die an dem Mittelteil angeordneten Arme (15) einstückig ausgebildet sind.

3. Antrieb gemäss einem der Ansprüche 1 oder 2, **dadurch gekennzeichnet, dass** die Arme (15) zumindest Bereichsweise in einem Winkel zum Mittelteil (6) angeordnet sind.

4. Antrieb gemäss einem der Ansprüche 1 bis 3, **dadurch gekennzeichnet, dass** die Arme (15) einen Knick aufweisen.

5. Antrieb gemäss einem der Ansprüche 1 bis 4, **dadurch gekennzeichnet, dass** die Arme (15) zumindest bereichsweise in etwa tangential zur Antriebsfläche (4) des Aussenteils (3) verlaufen.

6. Antrieb gemäss einem der Ansprüche 1 bis 5, **dadurch gekennzeichnet, dass** der Innenteil (2) gegenüber dem Aussenteil (3) selbstzentrierend ist.

7. Antrieb gemäss einem der Ansprüche 1 bis 6, **dadurch gekennzeichnet, dass** das mindestens eine Schwingelement (5) zwischen zwei Piezoelementen (9) angeordnet ist.

8. Antrieb gemäss einem der Ansprüche 1 bis 6, **dadurch gekennzeichnet, dass** das mindestens eine Piezoelement (9) zwischen zwei Schwingelementen (5) angeordnet ist.

9. Antrieb gemäss einem der Patentansprüche 1 bis 8, **dadurch gekennzeichnet, dass** an dem mindestens einen Arm (7) ein Piezoelement (9) angeordnet ist und dass der mindestens eine Arm (7) über einen Federbereich (8) mit dem Mittelteil (6) verbunden sind, derart dass der Arm als Resonatorbereich (7) funktioniert.

10. Antrieb gemäss einem der Ansprüche 1 bis 8, **dadurch gekennzeichnet, dass** das mindestens eine Piezoelement (9) flächig ist, parallel zum Mittelteil (6), rotationssymmetrisch und senkrecht zur Drehachse des Antriebs (1) angeordnet ist, und das mindestens eine Piezoelement (9) zur Schwingung in radialer Richtung ausgebildet ist.

11. Antrieb gemäss einem der vorangehenden Patentansprüche, **dadurch gekennzeichnet, dass** der Arm mehr als zwei Wirkverbindungen zum Aussenteil (3) aufweist.

12. Antrieb nach einem der vorangegangenen Ansprüche, **dadurch gekennzeichnet, dass** das Elastizitätsmodul (E-Modul) des Metallblechs und des Piezoelements, respektive die Dicke des Metallblechs und des Piezoelements so gewählt wird, dass die Formel.

$$\text{E-Modul}_{\text{Metallblech}} * \text{Dicke}_{\text{Metallblech}} = \text{E-Modul}_{\text{Piezoelement}} * \text{Dicke}_{\text{Piezoelement}}$$

erfüllt wird

## Claims

1. A piezoelectric drive (1) with an inner part (2) which is surrounded by an outer part (3) having an inwardly directed drive surface (4), wherein the inner part (2) comprises at least one piezoelement (9) which is operatively connected to at least one oscillation element (5), which oscillation element (5) is also part of the inner part (2) and serves for exciting an oscillation (17), wherein the oscillation element (5) comprises a plane middle part (6), around which at least two arms (7, 15) are arranged which are operatively connected to the drive surface (4) via in each case one of the interaction regions (16), and are designed in a manner such that set into oscillation by way of the at least one piezoelement (9), they drive the outer part (3) relative to the inner part (2), **characterised in that** the middle part (6) is attached to a mounting (20) for bearing the inner part (2), the arms (7, 15) are attached only to the middle part (6), the arms (7, 15) act as spring elements and are preloaded with respect to the drive surface (4) by way of this spring effect.

2. A drive according to claim 1, **characterised in that** the middle part (6) and the arms (15) arranged on the middle part are formed as one piece.

3. A drive according to one of the claims 1 or 2, **characterised in that** the arms (15) at least in regions are arranged at an angle to the middle part (6).

4. A drive according to one of the claims 1 to 3, **characterised in that** the arms (15) comprise a sharp bend.

5. A drive according to one of the claims 1 to 4, **characterised in that** the arms (15) at least in regions run roughly tangentially to the drive surface (4) of the outer part (3).

6. A drive according to one of the claims 1 to 5, **characterised in that** the inner part (2) is self-centering with respect to the outer part (3).

7. A drive according to one of the claims 1 to 6, **characterised in that** the at least one oscillation element (5) is arranged between two piezoelements (9).

8. A drive according to one of the claims 1 to 6, **characterised in that** the at least one piezolement (9) is arranged between two oscillation elements (5).

9. A drive according to one of the patent claims 1 to 8, **characterised in that** a piezolement (9) is arranged on the at least one arm (7) and that the at least one arm (7) is connected to the middle part (6) via a spring region (8) in a manner such that the arm functions as a resonator region (7).

10. A drive according to one of the claims 1 to 8, **characterised in that** the at least one piezoelement (9) is planar and is arranged parallel to the middle part (6) rotationally symmetrically and perpendicular to the rotation axis of the drive (1), and that at least one piezoelement (9) is designed for oscillation in the radial direction.

11. A drive according to one of the preceding patent claims, **characterised in that** the arm has more than two operative connections to the outer part (3).

12. A drive according to one of the preceding claims, **characterised in that** the modulus of elasticity (E-module) of the sheet metal and of the piezoelement, or the thickness of the sheet metal and the piezoelement is selected such that the formula

$$\text{E-module}_{\text{sheet metal}} * \text{thickness}_{\text{sheet metal}} = \text{E-module}_{\text{piezoelement}} * \text{thickness}_{\text{piezoelement}}.$$

is satisfied.

**Revendications**

1. Entraînement piézo-électrique (1) doté d'une partie intérieure (2) qui est entourée par une partie extérieure (3) qui présente une surface d'entraînement (4) tournée vers l'intérieur, la partie intérieure (2) présentant au moins un élément piézo-électrique (9) qui est relié fonctionnellement à au moins un élément oscillant (5) qui fait également partie de la partie intérieure et sert à exciter une oscillation (17), l'élément oscillant (5) présentant une partie centrale (6) plate autour de laquelle sont disposés au moins deux bras (7, 15) qui sont en liaison fonctionnelle avec la surface d'entraînement (4), chacun par une zone d'interaction (16), et étant configuré de telle sorte que lorsqu'ils sont mis en oscillation par l'au moins un élément piézo-électrique (9), ils entraînent la partie extérieure (3) par rapport à la partie intérieure (2), **caractérisé en ce que** la partie centrale (6) est fixée à un support (20) qui sert à monter la partie intérieure (2), les bras (7, 15) n'étant fixés que sur la partie centrale (6), les bras (7, 15) servant d'élément élastique et étant précontraints par rapport à la surface d'entraînement (4) grâce à cet effet élastique.

2.  Entraînement selon la revendication 1, **caractérisé en ce que** la partie centrale (6) et les bras (15) disposés sur la partie centrale sont réalisés d'un seul tenant.

3.  Entraînement selon l'une des revendications 1 ou 2, **caractérisé en ce qu'**au moins une partie des bras (15) est disposée obliquement par rapport à la partie centrale (6).

4.  Entraînement selon l'une des revendications 1 à 3, **caractérisé en ce que** les bras (15) présentent un coude.

5.  Entraînement selon l'une des revendications 1 à 4, **caractérisé en qu'**au moins une partie des bras (15) s'étend sensiblement tangentiellement à la surface d'entraînement (4) de la partie extérieure (3).

6.  Entraînement selon l'une des revendications 1 à 5, **caractérisé en ce que** la partie intérieure (2) est autocentrée par rapport à la partie extérieure (3).

7.  Entraînement selon l'une des revendications 1 à 6, **caractérisé en ce que** l'au moins un élément oscillant (5) est disposé entre deux éléments piézo-électriques (9).

8.  Entraînement selon l'une des revendications 1 à 6, **caractérisé en ce que** l'au moins un élément piézo-électrique (9) est disposé entre deux éléments oscillants (5).

9.  Entraînement selon l'une des revendications 1 à 8, **caractérisé en ce qu'**un élément piézo-électrique (9) est disposé sur l'au moins un bras (7) et **en ce que** l'au moins un bras (7) est relié à la partie centrale (6) par l'intermédiaire d'une zone élastique (8) de telle sorte que le bras fonctionne comme zone de résonance (7).

10. Entraînement selon l'une des revendications 1 à 8, **caractérisé en ce que** l'au moins un élément piézo-électrique (9) est plat, parallèle à la partie centrale (6), à symétrie de rotation et est disposé à la perpendiculaire de l'axe de rotation de l'entraînement (1) et **en ce que** l'au moins un élément piézo-électrique (9) est configuré de manière à osciller dans la direction radiale.

11. Entraînement selon l'une des revendications précédentes, **caractérisé en ce que** le bras présente plus de deux liaisons fonctionnelles avec la partie extérieure (3).

12. Entraînement selon l'une des revendications précédentes, **caractérisé en ce que** le module d'élasticité (module E) de la tôle métallique de l'élément piézo-électrique et l'épaisseur de la tôle métallique et de l'élément piézo-électrique sont sélectionnés de manière à satisfaire la formule:

$$\text{module } E_{\text{tôle métallique}} * \text{épaisseur}_{\text{tôle métallique}}$$

$$= \text{module } E_{\text{piézo-élément}} * \text{épaisseur}_{\text{piézo-élément}}.$$

FIG. 1

FIG. 2

FIG. 3

FIG. 4

FIG. 5

FIG. 6

FIG. 7

Fig. 12

FIG. 8

FIG. 9

FIG. 10

FIG. 11